Europäisches Patentamt

European Patent Office

Office européen des brevets

(11) Veröffentlichungsnummer: **0 220 465**

**A2**

(12) **EUROPÄISCHE PATENTANMELDUNG**

(21) Anmeldenummer: 86112845.2

(51) Int. Cl.⁴: **F16F 1/36**

(22) Anmeldetag: 17.09.86

(30) Priorität: 22.10.85 EP 85113408

(43) Veröffentlichungstag der Anmeldung:
06.05.87 Patentblatt 87/19

(84) Benannte Vertragsstaaten:
**AT BE CH DE FR GB LI NL**

(71) Anmelder: **Elaplast Gummi- und Kunststoff GmbH**
**Hanauer Landstrasse 16**
**D-6483 Bad Soden-Salmünster(DE)**

(72) Erfinder: **Antonijevic, Oleg, Dipl.-Ing.**
**Waldgartenstrasse 75**
**D-8000 München 70(DE)**
Erfinder: **Wolf, Franz-Josef**
**Sprudelallee 19**
**D-6483 Bad Soden-Salmünster(DE)**

(74) Vertreter: **Jaeger, Klaus, Dipl.-Chem. Dr.**
**JAEGER & PARTNER Patentanwälte**
**Pippinplatz 4a**
**D-8035 Gauting(DE)**

(54) **Auflager.**

(57) Das aus einem Elastomerblock gefertigte bewehrte Auflager ist dadurch schubversteift, daß in mindestens einen im Elastomerblock (1) ausgebildeten Hohlraum (6) ein biegefester oder biegesteifer Kern (14) eingreift, der biegefest mit einer Bewehrungsplatte (4) ("Lagerplatte") verbunden ist, die ihrerseits praktisch vollständig vom Elastomer des Elastomerblocks 1 umschlossen und in diesem Elastomer einvulkanisiert ist.

EP 0 220 465 A2

## Auflager

Die Erfindung betrifft ein Auflager aus einem zur Schubversteifung bewehrten Elastomerblock, in dem eine bis gegebenenfalls auf die Außenkanten und im Hinblick auf die Lagerfunktion unwesentliche Teilbereiche vollständig vom Material des Elastomerblocks umschlossene starre Lagerplatte (4) einvulkanisiert ist.

Solche Gummilager werden in den verschiedensten Bereichen der Technik eingesetzt, so beispielsweise zum Lagern kleinerer Geräte und Apparate, zum Lagern von Kraftfahrzeugkarosserieteilen, zur Gleiskörperlagerung und zur Lagerung von Brücken ebenso wie zur Lagerung von Industriebauten und Hochhäusern in erdbebengefährdeten Gebieten.

Charakterristisch ist für solche Gummilager, daß sie in Druckrichtung eine ausreichend gute Steifigkeit aufweisen, während sie gleichzeitig eine nur geringe Schubsteifigkeit besitzen. Zudem kann die Drucksteifigkeit durch eine Veränderung der geometrischen Form des Auflagers und/oder durch Einvulkanisieren von Zwischenblechen zur Erhöhung des Formfaktors ohne Schwierigkeiten in großen Bereichen veränderlich eingestellt werden, und zwar unabhängig von den Werkstoffdaten des jeweils eingesetzten Elastomers und der Schubsteifigkeit, während die Schubsteifigkeit nur durch eine Veränderung der Härte des Elastomers, also durch die Veränderung eines Werkstoffparameters, und damit unter Beeinflussung auch der Drucksteifigkeit verändert werden kann.

Zur Verbesserung der Schubsteifigkeit und Dämpfung in Querrichtung ist es aus der Praxis bekannt, ein solches Lager mit einem oder mehreren durchgehenden bleigefüllten Kanälen auszurüsten, die sich in Richtung der Auflasteinwirkung erstrecken.

Nachteilig an diesem bekannten Lager ist die durch die Bleifüllung verursachte ungünstige Beeinflussung der Federkenndaten und Dämpfung des Lagers in Druckrichtung.

Angesichts dieses Standes der Technik liegt der Erfindung die Aufgabe zugrunde, ein Elastomerauflager der eingangs genannten Art zu schaffen, das ohne die Kenndaten der Federung und Dämpfung in Druckrichtung zu beeinflussen, eine freie Einstellbarkeit der Schubsteifigkeit ermöglicht.

Zur Lösung dieser Aufgabe ist ein Auflager der eingangs genannten Art **gekennzeichnet** durch mindestens einen im Elastomerblock ausgebildeten zur Lagerplatte hin offenen gegenüberliegend geschlossenen Hohlraum, in dem ein biegefest mit der Lagerplatte verbundener biegefester oder plastisch oder elastisch biegesteifer Kern aufgenommen ist, der eine höhere Schubsteifigkeit als der Elastomerblock aufweist.

Mit anderen Worten, der Erfindung liegt der wesentliche Gedanke zugrunde, die Schubsteifigkeit eines Auflagers aus einem Elastomer, im einfachsten Fall also auch eines Gummipuffers, dadurch konstruktiv weitgehend beliebig gestaltend zu verbessern, daß in dem Elastomerblock des Auflagers ein biegefester oder biegesteifer Kern angeordnet ist, der biegefest und schubgesichert mit einer Bewehrungsplatte, genauer "Lagerplatte", die im Elastomer einvulkanisiert ist, verbunden ist, wobei der starre Verbund aus einer Lagerplatte und Kern so im Elastomerblock des Auflagers angeordnet ist, daß diese starre Struktur weder mit dem zu lagernden Lastteil oder dem Widerlager noch mit dem Gegenlager oder oder Gegenlagerplatte ungefedert kraftleitend, das heißt also unmittelbar und ohne federnd zwischenliegendes Elastomer, in Berührung gelangt. Dabei ist es prinzipiell von untergeordneter Bedeutung, ob die Außenränder der Lagerplatte in den Seitenwandflächen des Elastomerblocks freiliegen oder sogar geringfügig über diesen überstehen, oder ob diese Außenkanten der Lagerplatte rundum vollständig im Elastomerblock eingebettet und eingeschlossen sind. Insbesondere bei relativ dünner Ausbildung der Elastomerschicht zwischen der äußeren Oberfläche des Lagers und der Lagerplatte wird jedoch die zuletzt genannte Ausgestaltung mit ringsum eingeschlossener Außenkante der Lagerplatte vorzuziehen sein, um zu vermeiden, daß bei einem bestimmungsgemäßen Verkippen oder Verdrehen der Lagerplatte unter Schubeinwirkung auf das Auflager eine der Außenkanten der Lagerplatte noch in unbeabsichtigter Weise auf dem Widerlager oder dem Lastauflageteil zur Auflage kommt. Wenn die Außenkanten der Lagerplatte vollständig vom Elastomer umschlossen sind, ist jedoch darauf zu achten, daß die Lagerplatte zumindest in Richtung der einwirkenden Schubkraft ausreichend breit ausgebildet ist, um dem Kern im Elastomerblock die erforderliche "Standfestigkeit" zu verleihen, genauer gesagt, um dem Kern den erforderlichen Kippwiderstand aufzuprägen.

Durch die zwischen der Lagerplatte und dem Lastelement oder dem Widerlager vorgesehene Elastomerschicht steht der Kern im Auflager nie absolut kippfest, sondern ist stets mit einer mehr oder minder großen elastisch abgefederten Verkippbarkeit ausgestattet. Die Federkennlinie dieser elastischen Verkippbarkeit des Kerns im Auflager hängt dabei primär und wesentlich von der Dicke und Härte der zwischen der Lagerplatte und der Lageroberfläche ausgebildeten Elastomerschicht ab. Da die federelastische Verkippbarkeit des Kerns im Auflager jedoch ein wesentliches Bestimmungsmoment der Kennlinie der Schubsteifigkeit des Auflagers ist, kann also die Kennlinie der Schubsteifigkeit des Auflagers in einfacher Weise durch die Dicke der zwischen der Lagerplatte und der Lageroberfläche ausgebildeten Elastomerschicht modifiziert werden, und zwar mit der Maßgabe, daß die Schubsteifigkeit bei sonst unveränderten Lagermerkmalen umso größer wird und umso steiler ansteigt, je dünner diese Elastomerzwischenschicht zwischen Lagerplatte und Lageroberfläche ist.

Ein weiteres Mittel zur Beeinflussung des Verlaufs der Schubsteifigkeit des Auflagers liegt in der Wahl des Kernmaterials. Prinzipiell kann der Kern sowohl aus einem einheitlichen Werkstoff oder aus einem geeigneten Verbundwerkstoff bestehen. Weiterhin kann der Werkstoff formbeständig starr, steif elastisch oder plastisch mit vorzugsweise hoher innerer Reibung sein. Formbeständig wird der Kernwerkstoff vor allem dann gewählt werden, wenn eine hohe Schubsteifigkeit für das Lager benötigt wird. In diesem Fall besteht der Kern des Auflagers vorzugsweise aus Stahl. Steif elastisch, also mit steiler Federkennlinie, wird der Auflagerkern vorzugsweise dann ausgebildet, wenn die Schubsteifigkeit des Auflagers einen möglichst weich ansteigenden Verlauf zeigen soll. Als Werkstoffe für solche Kerne kommen insbesondere Elastomere mit einer Härte von mindestens 80 Shore A oder Faserverbundwerkstoffe in Betracht. Plastisch und mit hoher erforderlicher Verformungsarbeit wird der Kern insbesondere dann ausgelegt, wenn für das Auflager in Querrichtung eine hohe Dämpfung erforderlich ist, so beispielsweise bei der Lagerung von Hochbauten in erdbebengefährdeten Gebieten. In diesem Fall besteht der Kern vorzugsweise aus Blei oder einer der Anwendungsspezifikation angepassten Bleilegierung.

Wenn der Kern des Auflagers formbeständig spröde ausgebildet ist, ist er nach einer Ausgestaltung der Erfindung vorzugsweise mit einer Sollbruchstelle versehen, um bei einem unvorhergesehenen Überschreiten der Grenzwerte der einwirkenden Schubkräfte eine anschlagartige Begrenzung des Schubweges dort, wo diese unerwünscht ist und zu katastrophalen Folgen führen kann, in jedem Fall auszuschließen.

Wenn die meist quaderförmig, tonnenförmig oder scheibenförmig ausgebildeten Auflager Schubkräfte aus beliebigen Richtungen aufnehmen müssen, so ist nach einer Ausgestaltung der Erfindung entweder ein einzelner Kern im Auflager vorgesehen, der rotationssymmetrisch um eine Achse ausgebildet ist, die parallel zur Richtung der Auflast steht, oder sind mehrere Kerne, die ebenfalls vorzugsweise rotationssymmetrisch ausgebildet und ihrerseits symmetrisch um die zur Richtung der Auflasteinwirkung parallelen Mittellinie des Auflagers angeordnet sind. Wenn die auf das Auflager einwirkenden Schubkräfte nur eine bestimmte vorgegebene Richtung aufweisen können, so wie dies beispielsweise bei ortsfesten Maschinenlagerungen der Fall ist, dann braucht der Kern des Auflagers nicht rotationssymmetrisch ausgebildet zu sein und brauchen, bei mehreren Kernen, diese nicht rotationssymmetrisch zur geometrischen Form des Auflagers in diesem verteilt angeordnet zu sein, vielmehr ist es in diesem Fall vorzuziehen, den oder die Kerne entweder gleichmäßig oder nach einer vorgegebenen Funktion quer zur Richtung der einwirkenden Schubkräfte zu verteilen. Wenn beispielsweise das Auflager als scheibenförmiger Quader ausgebildet ist, der quer zur Richtung der einwirkenden Schubkräfte angeordnet ist, so kann der Kern des Auflagers beispielsweise als eine Schiene ausgebildet sein, die sich parallel zu den Längskanten des Quaders ungefähr auf dessen Mittellinie quer durch das gesamte Auflager erstreckt. Wenn jedoch beispielsweise in bestimmten Anwendungsfällen mit einem Angriff relativ hoher Schubkräfte an den beiden Seiten eines solchen quaderförmigen Auflagers zu rechnen ist, während im Mittelbereich des ebenfalls wiederum quaderförmig angenommenen Auflagers kaum mit einem nennenswerten Angriff von Schubkräften zu rechnen ist, so kann der Kern beispielsweise in Form von zwei kürzeren Schienen ausgebildet sein, die im Bereich der beiden kurzen Schmalseiten des Quaders angeordnet sind.

Die vorstehenden Beispiele zeigen, daß sowohl die Gestalt des Auflagerkerns an sich als auch dessen Anordnung oder, bei mehreren Kernen, deren Verteilung im Elastomerblock zunächst keine prinzipielle Frage, sondern eine den Anforderungen der Anwendungsspezifikationen folgende Ausgestaltung ist. Entscheidend ist lediglich, daß der Kern biegefest oder biegesteif mit einer abstützenden, im Elastomer einvulkanisierten Lagerplatte oder einem Zwischenblech verbunden ist, das sich zumindest im wesentlichen parallel zu zumindest einer der beiden Auflageflächen des Lagers, Auflagerfläche oder Widerlagerfläche, erstreckt.

Nach einer Ausgestaltung der Erfindung ist der im Elastomerblock des Auflagers ausgebildete Hohlraum vorzugsweise hinsichtlich seines Volumens großer als der Kern ausgebildet, und zwar in der Weise, daß bei unbelastetem Auflager der Kern frei in diesen Hohlraum hineinragt, ohne dessen Innenwand zu berühren. Durch diese Ausgestaltung wird erreicht, daß der Kern nicht von vornherein die Federkenndaten des Auflagers mitbestimmt, sondern daß sich das Lager sowohl in Druckrichtung als auch in Schubrichtung zunächst frei und entsprechend der Federkenndaten des Elastomers verformen kann und die die Federkennlinien beeinflussende Wirkung des Kerns erst dann einsetzt, wenn nach einer Anfangsverformung des Elastomerblocks des Auflagers die Innenwand des Hohlraums auf der Oberfläche des Kerns zur Auflage gelangt. Mit anderen Worten, die Versteifung der Federkennlinie, und zwar prinzipiell sowohl in Schubrichtung als auch in Druckrichtung, tritt bei der hier beschriebenen Ausgestaltung der Erfindung also erst dann auf, wenn nach einer Anfangsverformung die Innenwand des Hohlraums im Elastomerblock des Auflagers den Kern zu berühren beginnt Dabei ist der Abstand der Innenwand des Hohlraums von der Kernoberfläche in Auflastrichtung, das heißt in Druckrichtung, vorzugsweise so gewählt, daß unter bestimmungsgemäßer Auflast zuzüglich eines vorgegebenen Schwingungsweges die Innenwand des Hohlraums die Oberfläche des Kerns nicht berührt, um inhomogene punktuelle Versteifungen des Auflagers in Druckrichtung auszuschließen. Vielmehr wird die Drucksteifigkeit des Lagers in gebräuchlicher Weise neben der Einstellung der Härte des Elastomers primär durch Zwischenbleche oder entsprechende Horizontalflächenarmierungen festgelegt.

In Schubrichtung ist der Abstand zwischen der Kernoberfläche und der Hohlrauminnenwand vorzugsweise ebenfalls so bemessen, daß die Schubversteifung erst nach einer vorgegebenen weichen Schubverformung einsetzt, so daß kleinere Schubkräfte mit kleineren Amplituden zunächst weich abgefedert werden können.

Weiterhin kann der Verlauf der Federkennlinie des Auflagers, ebenfalls prinzipiell wiederum sowohl in Druckrichtung als auch in Schubrichtung, wobei vorliegend jedoch primär die Schubrichtung von Interesse ist, durch die geometrische Formgebung der Wirkflächen des Kerns und des Hohlraums beeinflusst werden. Wenn beispielsweise die Kernoberfläche und die Hohlrauminnenwand in einander gegenüberliegenden Bereichen derart unterschiedlich gekrümmt sind, und zwar so gekrümmt ausgebildet sind, daß die Kernoberfläche den kleineren Krümmungsradius und die Hohlrauminnenwand den größeren Krümmungsradius aufweist, wird die tatsächliche Berührungsfläche zwischen diesen beiden Oberflächen zunächst klein sein und wird die Hohlrauminnenwandfläche den Kern erst mit zunehmender Krafteinwirkung und zunehmender Verformung des Elastomers zunehmend mehr umschließen, so daß sich die versteifende Wirkung des Kerns erst weich und allmählich auf die Steifigkeit des Auflagers in Richtung der Krafteinwirkung, primär also in Schubrichtung, auswirken wird. Mit anderen Worten, es wird auf diese Weise ein weicher Verlauf der Federkennlinie erzielt. Werden dagegen die einander gegenüberstehenden Abschnitte der Kernoberfläche und der Hohlrauminnenwand als zueinander parallel verlaufende flächenkomplementäre Flächen mit relativ großem Flächeninhalt ausgebildet, so wird sich die versteifende Wirkung des Kerns bei Flächenberührung zwischen Kern und Elastomer relativ abrupt in der Federkennlinie in Richtung der Krafteinwirkung, hier also wiederum primär in Richtung der Einwirkung der Schubkraft, auswirken.

Der Fachmann erkennt also, daß er neben der Wahl des Kernmaterials auch in der geometrischen Gestaltung der Oberflächen des Kerns und des im Elastomer ausgebildeten Hohlraums ein effektives Mittel zur Gestaltung der Federkennlinie und der Steifigkeit des Auflagers in der Hand hat.

Nach einer weiteren Ausgestaltung der Erfindung ist der bei größerer Ausbildung des im Elastomer ausgebildeten Hohlraums gegenüber dem Kern der verbleibende Zwischenraum zwischen der Kernoberfläche und der Hohlrauminnenwand mit einem festen, flüssigen oder gasförmigen Dämpfungsmittel, vorzugsweise mit einem Druckgas oder einer hydraulischen Flüssigkeit, gefüllt, um die Dämpfung des Auflagers, wo dies erforderlich ist, zu verbessern. Vorzugsweise ist der Hohlraum mit einem Silikonöl gefüllt.

Zusätzlich zum Dämpfungsfluid oder alternativ zu diesem kann der zwischen Kernoberfläche und Hohlrauminnenwand verbleibende Zwischenraum entweder nur in Schubrichtung oder gegebenenfalls nur in Druckrichtung oder vollständig mit einem zusätzlichen Federglied, beispielsweise einer Stahlfeder prinzipiell beliebiger Ausgestaltung oder einer Elastomerfeder, überbrückt werden, um so bereits von der ersten Verformung des Auflagers bei einwirkenden Kräften an eine weich einfedernde versteifende Wirkung des Kerns auf die Gesamtcharakteristik des Auflagers zu erreichen. Im Gegensatz zu den vorstehend beschriebenen Ausgestaltungen weist eine solche Kennlinie des Auflagers also von vornherein bereits eine Versteifung auf, und setzt die Kennlinie des Lagers nicht zunächst mit der unmodifizierten Kennlinie des Auflagerelastomers ein.

Auch aus dieser möglichen Ausgestaltung des Auflagers erkennt der Fachmann die große konstruktive Freiheit bei der Verwirklichung auch sonst unrealisierbarer, vom Einsatzfall vorgegebener Kennlinienverläufe.

Nach einer weiteren Ausgestaltung der Erfindung ist der Hohlraum, der den Kern aufnimmt, offen ausgebildet, vorzugsweise durch die Lagerplatte hindurch offen ausgebildet, und zwar mit einem solchen lichten Durchmesser, daß der Kern unbehindert in den Hohlraum im Auflager einbringbar und aus diesem herausnehmbar ist. Dabei weist der Kern einen Fuß auf, der zumindest im wesentlichen dem Durchmesser der Öffnung des Hohlraums in der Lagerplatte entspricht, und über den der Kern fest mit der Lagerplatte verbindbar ist. Dabei kann diese Verbindung prinzipiell in beliebiger Weise erfolgen, solange der hergestellte Verbund biegefest oder zumindest in der erforderlichen Weise biegesteif ist. Die Verbindung zwischen Kern und lagerplatte kann bei dieser Ausgestaltung des Auflagers vorzugsweise über ein Schraubgewinde, eine konusförmige Keilverbindung, über eine Flanschverbindung oder ein Bajonett, insbesondere über eine Schraubverbindung erfolgen. Die Schraubverbindung ist dabei vorzugweise so ausgebildet, daß der Fluß des Kerns ein Außengewinde aufweist, das in ein Innengewinde in der Öffnung der Lagerplatte einschraubbar ist. Bei diesem Verbund wird eine optimale Festigkeit zwischen Kern und Basisplatte erreicht.

Die vorstehend beschreibene Ausgestaltung der Erfindung gewährleistet nicht nur die Möglichkeit eines Austauschs beschädigter oder verschlissener Kerne, sondern erleichtert auch des Füllen des Hohlraums mit einem Dämpfungsfluid und vereinfacht zudem die Herstellung des Auflagers.

Alternativ kann der Kern bei der hier beschriebenen Ausgestaltung des Lagers mit dem sich nach außen durch die Lagerplatte hindurch öffnenden Hohlraum auch in die Lagerplatte eingeschweißt sein. Für diese Art der Befestigung des Kerns in der Lagerplatte ist diese im Bereich der Öffnung nicht bis unmittelbar an den Rand der Öffnung heran gummiert, sondern liegt der unmittelbare Öffnungsbereich der Lagerplatte sowohl nach außen als auch zum Hohlraum zu frei, steht also nach Art eines Innenflansches frei in die Hohlraumöffnung hinein.

Um eine noch bessere Schubankopplung der beiden einander gegenüberliegenden Lageroberflächen, also der Auflagefläche und der Widerlagerfläche des Auflagers, das heißt um eine noch wirksamere Schubversteifung zu erzielen, ist nach einer weiteren Ausgestaltung der Erfindung das Auflager mit der einvulkanisierten Lagerplatte und dem auf dieser befestigten Kern, der in den im Elastomerblock ausgebildeten Hohlraum hineinragt, weiterhin dadurch **gekennzeichnet**, daß zumindest im wesentlichen flächenparallel zur Lagerplatte und dieser im Elastomerblock gegenüberliegend eine starre Gegenlagerplatte im Elastomerblock einvulkanisiert ist, die bzw. auf der fest und starr ein biegefester Käfig befestigt ist, der, ebenfalls zumindest im wesentlichen vollständig im Material des Elastomerblocks eingebettet, den im Elastomerblock ausgebildeten Hohlraum mit Abstand in Querrichtung übergreift oder umschließt. Dabei ist die Gegenlagerplatte ebenso wie die Lagerplatte bis gegebenenfalls auf die Außenkanten und im Hinblick auf die Lagerfunktion höchstens unwesentliche Teilbereiche vollständig vom Material des Elastomerblocks umschlossen bzw. im Elastomer des Blocks einvulkanisiert.

Bei dieser Ausgestaltung des Auflagers erstreckt sich der Käfig so weit in den zwischen der Lagerplatte und der Gegenlagerplatte verfügbaren Zwischenraum hinein, daß er einen wesentlichen Teil des Kerns, bezogen auf seine Ausdehnung in Richtung des Auflastvektors, der bei bestimmungsgemäßer Verwendung des Lagers auf dieses einwirkt, mit übergreift, ohne dabei bei bestimmungsgemäß belastetem Lager die Federkennlinie des Lagers durch praktisch nicht mehr federnde Auflage auf der Lagerplatte funktionswesentlich zu verändern. Bei dieser Ausgestaltung wird also aufgabengemäß die Schubversteifung bzw. die Schubfestigkeit des Auflagers quer zur Auflast weiter verfestigt, ohne dabei eine Veränderung oder Versteifung der Federkennlinie des Auflagers in Auflastrichtung in Kauf nehmen zu müssen.

Im Zusammenhang mit dem vorstehend beschriebenen Ausführungsbeispiel ist dabei die Beschreibung, daß der Käfig den im Elastomerblock ausgebildeten Hohlraum mit Abstand umschließt oder zumindest übergreift so zu verstehen, daß, vom Käfig aus gesehen, die Innenwand des Käfigs vollständig mit Elastomer ausgekleidet ist.

Weiterhin sind im Rahmen der gesamten vorliegenden Beschreibung, insbesondere jedoch auch im Zusammenhang mit dem vorstehend beschriebenen Ausführungsbeispiel, die Begriffe "Lagerplatte" und "Gegenlagerplatte" bezüglich des Kraftvektors, der bei bestimmungsgemäßer Verwendung des Lagers auf das Lager einwirkt, so zu verstehen, daß diese Begriff beide möglichen Anordnungen der Platten einschließen, so daß also die "Lagerplatte" sowohl Auflagerplatte als auch Widerlagerplatte und entsprechend umgekehrt die Gegenplatte sowohl Widerlagerplatte als auch Auflagerplatte sein kann. Mit anderen Worten, der mit dem Auflager gemäß der Erfindung erzielbare Vorteil der Schubversteifung ohne Kennlinienversteifung wird unabhängig von einer "seitenrichtigen" oder "seitenverkehrten" Montagelager des Auflagers bezüglich der Ausrichtung des Auflastvektors erzielt.

Für zahlreiche Anwendungsfälle, insbesondere im Schwerlastbereich, ist es schließlich zweckmäßig, daß der mit einer Härte im Bereich von ungefähr 20 bis 50 Shore A relativ weich ausgebildete Elastomerblock an seinen Lageroberflächen wesentlich härter ausgebildet ist, beispielsweise und vorzugsweise mit einer Härte im Bereich von 65 bis 95 Shore A. Ins besondere ist dabei dieser Bereich des härter eingestellten Werkstoffs auf den Teil bzw. Bereich des Elastomerblocks beschränkt, der zwischen der Oberfläche der Lagerplatte bzw., falls eine solche vorhanden ist, der Gegenlagerplatte und der zugeordneten äußeren Oberfläche des Auflagers liegt.

Die Erfindung ist im folgenden anhand von Ausführungsbeispielen in Verbindung mit den Zeichnungen näher erläutert. Es zeigen:

Fig. 1 ein Ausführungsbeispiel des Auflagers im senkrechten Querschnitt nach I-I in Fig. 2;

Fig. 2 einen horizontalen Querschnitt nach II-II in Fig. 1;

Fig. 3 ein zweites Ausführungsbeispiel des Auflagers in einem der Darstellung der Fig. 1 entsprechenden Schnitt nach III-III in Fig. 4;

Fig. 4 einen Schnitt nach IV-IV in Fig. 3;

Fig. 5 ein drittes Ausführungsbeispiel des Auflagers in schematischer perspektivischer Darstellung; und

Fig. 6 ein viertes Ausführungsbeispiel des Auflagers im senkrechten Querschnitt.

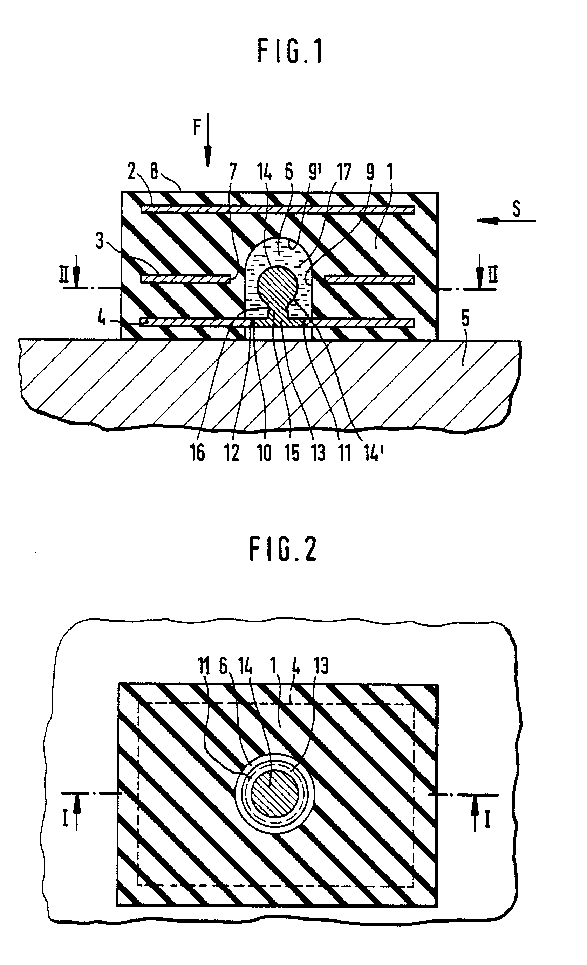

Das in den Fig. 1 und 2 im Schnitt schematisch dargestellte Auflager besteht aus einem Elastomerblock 1, in den zur Verbesserung der Drucksteifigkeit, also zur Verbesserung der Federsteifigkeit in Richtung der einwirkenden Kraft F, in gebräuchlicher Weise Zwischenbleche einvulkanisiert sind, von denen in der schematischen Darstellung in der Fig. 1 ein oberes Zwischenblech 2 ("Gegenlagerplatte"), ein mittleres Zwischenblech 3 und eine Basisplatte 4 ("Lagerplatte") dieser Bewehrung dargestellt sind. Die Bewehrungsplatten oder Zwischenbleche 2, 3, 4 sind vollständig einschließlich ihrer Außenkanten vom Elastomer des Blocks 1 umschlossen und vollständig in dieses einvulkanisiert. Das Auflager liegt auf einem Widerlager 5 auf.

In dem aus dem Elastomerblock 1 und den Bewehrungen 2,3,4 bestehenden Auflager ist ein Hohlraum 6 ausgebildet, der auflastseitig geschlossen und widerlagerseitig offen ist. Dabei wird die Funktion des Lagers jedoch nicht beeinträchtigt, wenn das Lager um 180 ° um die Horizontale verdreht eingesetzt wird, also so, daß der Hohlraum 6 widerlagerseitig geschlossen und auflastseitig offen ausgerichtet ist, wie dies beispielsweise in Fig. 6 dargestellt ist.

Der Hohlraum 6 ist zylindrisch mit einer kugelkappenförmigen Kuppel ausgebildet. Über der Kuppel des Hohlraums 6 ist die bis zur auflastseitigen Oberfläche 8 verbleibende Elastomerschicht ausreichend dick, um das oberste Zwischenblech 2 so vollständig einzuschließen, daß dieses weder an der Oberfläche 8 des Auflagers noch im Hohlraum 6 freiliegt. Das oder die mittleren Zwischenbleche 3 weisen jeweils eine Öffnung 7 auf, die so groß bemessen ist, daß deren Innenrand nicht in den Hohlraum 6 hineinragt und in der in Fig. 1 dargestellten Weise auch nicht in der Innenwandfläche 9 des Hohlraums 6 freiliegt.

Die Lagerplatte 4 weist eine Öffnung 10 auf, die in der Innenwand des Kragenabschnitts des Hohlraums 6 freiliegt, bzw. geringfügig nach radial innen vorsteht, und ein Innen gewinde 11 aufweist, in das über ein entsprechendes Außengewinde 12 eine Fußplatte 13 eines Auflagerkerns 14 fest und fluiddicht eingeschraubt ist. Der Kern 14 ist einstückig mit der Fußplatte 13 ausgebildet, besteht aus Stahl und hat die Gestalt einer Kugel, die über einen Hals 15 auf der Fußplatte 13 steht. Im Hals 15 ist als Sollbruchstelle 16 eine ringförmige Schwächung ausgebildet. Der Durchmesser des kugelförmigen Bereichs des Kerns 14 ist kleiner als der Durchmesser des Hohlraums 6 und gleichzeitig auch kleiner als die über der Fußplatte 13 verbleibende Höhe des Hohlraums 6. Mit anderen Worten, der Kern 14 berührt an keiner Stelle die Innenwand 9 des im Elastomerblock 1 ausgebildeten Hohlraums 6.

Der zwischen dem Kern 14 und der Innenwand 9 des Hohlraums 6 verbleibende Zwischenraum ist mit einem dämpfenden Silikonöl 17 gefüllt.

Wirkt auf das in den Fig. 1 und 2 gezeigte Auflager eine Schubkraft S ein, so wird diese zunächst mit der sehr geringen Schubsteifigkeit des Elastomers des Elastomerblocks 1 unter Dämpfung durch die hydraulische Flüssigkeit 17 abgefedert. Wenn die Schubverformungsamplitude größer als der Abstand der Oberfläche des Kerns 14 von der Innenwandfläche 9 des Hohlraums 6 ist, gelangt bei dem hier erörterten Ausführungsbeispiel ein Teil des zylindrischen Abschnitts der Hohlrauminnenwand 9 zur Anlage an der Kugelfläche des Kerns 14. Während der ersten Berührungsstadien wird sich der Widerstand des über die Lagerplatte 4 gegen Verkippen federnd gesicherten Kerns 14 lediglich als geringfügige Vergrößerung der Schubsteifigkeit des Auflagers auswirken. Mit zunehmendem Schub wird jedoch die Kugeloberfläche tiefer in die sich verformende Innenwandfläche 9 des Hohlraums 6 im Elastomerblock 1 eindringen und über die zunehmende Verformungsversteifung in diesem Bereich und die zunehmend größere Wirkfläche, über die der Elastomerblock 1 und der Kern 14 miteinander in Wechselwirkung treten, wird der Einfluß des Kerns 14 auf die Schubsteifigkeit progressiv größer, so daß bei größeren Schubkräften eine rasch zunehmende Versteifung der Lagerkennlinie in Richtung der einwirkenden Schubkraft auftritt. Mit anderen Worten, ohne Veränderung der Härte des Werkstoffs des Elastomerblocks 1 und ohne eine Beeinträchtigung der Drucksteifigkeit in Richtung der einwirkenden Auflastkraft F wird durch den Kern 14 eine stark progressive Schubversteifung für das Auflager erhalten, wobei überdies Schubverformungsschwingungen durch das eingeschlossene Dämpfungsfluid 17 gedämpft werden.

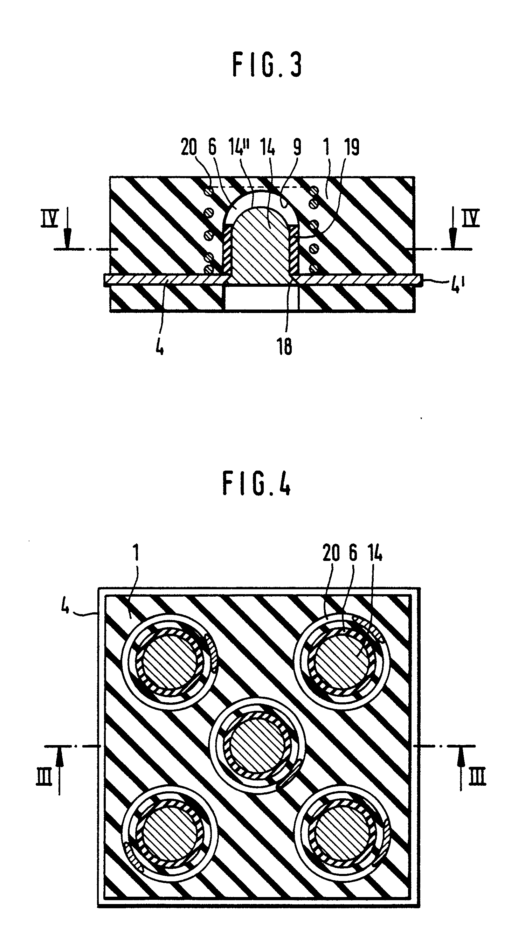

Wie aus der Fig. 2 ersichtlich, weist das vorstehend beschriebene erste Ausführungsbeispiel der Erfindung einen quaderförmigen Elastomerblock 1 auf, in dem zentral ein einziger Hohlraum 6 mit einem einzigen rotationssymmetrischen Kern 14 ausgebildet bzw. angeordnet sind. Demgegenüber weist das in den Fig. 3 und 4 schematisch dargestellte, ebenfalls quaderförmige Auflager in zentrosymmetrischer Verteilung fünf Hohlräume auf, in die je ein Kern, der in Richtung der Auflast in sich rotationssymmetrisch geformt ist, hineingreift. Alle fünf Kerne und Hohlräume (siehe Fig. 4) sind untereinander identisch ausgebildet. Dies ist jedoch nicht zwingend erforderlich. Vielmehr können beispielsweise entweder der zentrale Kern oder die umliegenden Kerne stärker als die anderen ausgebildet sein. Auch können, wenn die aufzunehmenden Schubkräfte primär aus nur einer Richtung erwartet werden, die in dieser Richtung vorn liegenden Kerne stärker oder mit anderen Oberflächenkonturen ausgebildet sein. Im einzelnen sind nach diese Ausführungen wesentlich vom geplanten Anwendungsbereich des Auflagers abhängig und als Anpassungen ohne weiteres vom belehrten Fachmann durchzuführen.

Wie aus der Fig. 3 ersichtlich, ist der bei diesem Ausführungsbeispiel gezeigte Elastomerblock 1 nur mit einem einzigen Zwischenblech bewehrt, nämlich der zur Verwirklichung der Erfindung unerläßlichen Lagerplatte 4, an der der Kern 14 federnd, kippgesichert und biegefest ist, und zwar über einen Klemmkonus 18. Im Gegensatz zu der in Fig. 1 gezeigten Lagerplatte steht die in der Fig. 3 gezeigte Lagerplatte 4 mit ihren Außenkanten 4' geringfügig über die äußere Seitenfläche des Elastomerblocks 1 über. Ob die Zwischenbleche 2,3,4 im einzelnen Ausführungsbeispiel überstehen oder nicht, ist eine Frage der Zweckmäßigkeit bei der Herstellung der Auflager und im Rahmen der vorliegenden Erfindung solange ohne Bedeutung, wie sichergestellt ist, daß bei einwirkender Schubkraft die Außenkante der Lagerplatte 4 nicht auf der Oberfläche des Widerlagers 5 ungefedert aufsitzt und dadurch die Federcharakteristik des gesamten Auflagers beeinträchtigt.

In der in Fig. 3 angedeuteten Weise ist der Zwischenraum zwischen der Innenwandfläche 9 des Hohlraums 6 und dem zylindrischen Abschnitt des flächenkomplementär, aber mit kleineren Abmessungen ausgebildeten und koaxial zum Hohlraum 6 angeordneten Kerns 14 mit einem Federglied 19, hier einer schematisch angedeuteten weichen Gummifeder, ausgefüllt, so daß die Schubsteifigkeit des Auflagers bereits von der ersten Verformung an um die Kenndaten dieser Feder mäßig versteift wird, ehe sich die signifikante Schubversteifung durch den Kern voll auszuwirken beginnt. Während also der Beginn der Kennlinie der Schubsteifigkeit bei dem in Fig. 1 gezeigten Ausführungsbeispiel sehr weich verläuft, nämlich nur entsprechend der geringen Schubsteifigkeit des Elastomers 1, verläuft dieser Abschnitt der Schubsteifigkeitskennlinie bei dem in Fig. 3 gezeigten Ausführungsbeispiel bereits deutlich steifer, wiederum jedoch deutlich weicher als er verlaufen würde, wenn die Innenwand 9 des Hohlraums 6 bereits im entspannten Zustand flächenbündig an der zylindrischen Mantelfläche des Kerns 14 anliegen würde.

Sowohl bei dem in Fig. 1 gezeigten Ausführungsbeispiel als auch bei dem in Fig. 3 gezeigten Ausführungsbeispiel ist in jedem Fall der Abstand vom oberen Scheitelpunkt 14'' des Kerns 14 zum Scheitel 9'der Hohlraumkuppel so groß, daß bei bestimmungsgemäß belastetem Auflager zuzüglich eines bestimmungsgemäß vorgesehenen Federweges in Druckrichtung keine Berührung zwischen der inneren Scheitel-oder Bodenfläche 9' des Hohlraums 6 und der Scheiteloberfläche 14'' des Kerns 14 eintritt.

Bei dem in den Fig. 3 und 4 gezeigten Ausführungsbeispiel ist weiterhin jeder der Hohlräume 6 noch einmal durch eine Spiralfeder 20 verfestigt, die als zusätzliche Armierung um den Hohlraum 6 im Elastomer 1 einvulkanisiert ist. Durch diese Maßnahme wird nicht nur die Festigkeit des Elastomers im Hohlraumbereich vergrößert, sondern wird auch die Gleichmäßigkeit der Spannungsverteilung verbessert, die bei einwirkenden Schubkräften vom Kern 14 dem Elastomer 1 als Verformungsspannung aufgeprägt wird.

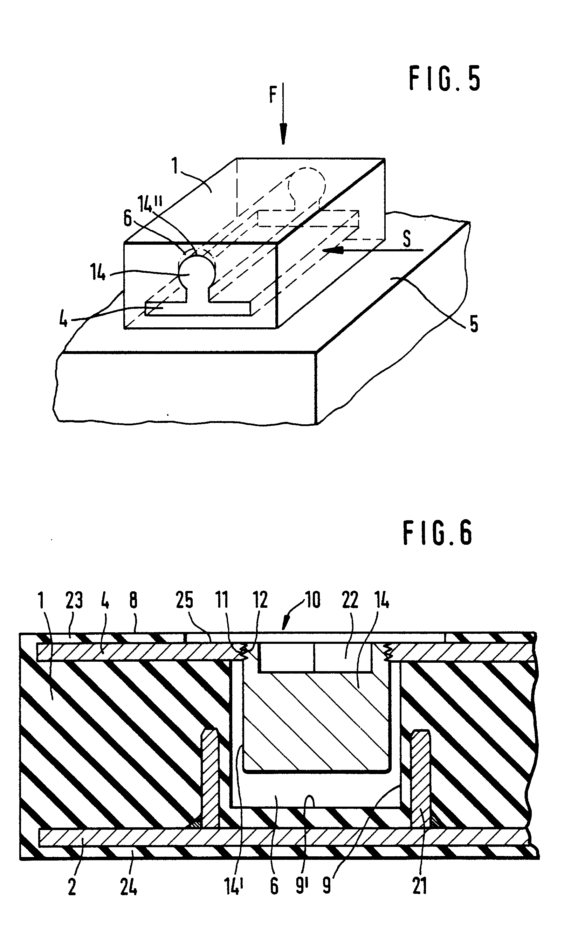

Während die vorstehend beschriebenen Fig. 1 bis 4 zwei Ausführungsbeispiele mit einer symmetrischen Kernkonfiguration und einer symmetrischen Verteilung der Kerne im Elastomerblock 1 des Auflagers zeigen, so daß das Auflager zur Aufnahme von Schubkräften aus prinzipiell beliebiger Richtung ausgelegt ist, ist in der Fig. 5 in - schematischer perspektivischer Darstellung ein weiteres Ausführungsbeispiel des Auflagers dargestellt, das zur Aufnahme von Schubkräften aus primär nur einer Richtung ausgelegt ist, nämlich zur Aufnahme von Schubkräften senkrecht zur Längserstreckung des flach quaderförmig ausgebildeten Auflagers. Solche Auflager können beispielsweise zur Lagerung von Maschinen dienen, für die genaue Schwingungsanalysen vorliegen.

Bei dem in Fig. 5 dargestellten Ausführungsbeispiel des Auflagers sind aus Gründen einer einfacheren Darstellung die Zwischenbleche zeichnerisch nicht dargestellt, die bei einer praktischen Ausführung des Lagers in der in Fig. 1 gezeigten Weise auch bei Auflagern der in Fig. 5 gezeigten Art vorhanden sind. Dargestellt ist lediglich die Lagerplatte 4, die insgesamt einstückig mit dem Kern 14 ausgebildet ist. Der Kern 14 hat die Form eines langgestreckten, auf der Oberkante einer stegförmigen Rippe liegenden Zylinders, der sich von einer Schmalseite bis zur gegenüberliegenden Schmalseite des quaderförmigen Elastomerblocks 1 des Auflagers erstreckt. In dem hier gezeigten Ausführungsbeispiel ist der Kern 14 in den Elastomerblock 1 unmittelbar einvulkanisiert, so daß also die Innenwand 9 des Hohlraums 6 im Elastomerblock 1 des Auflagers der Oberfläche des Kerns 14 unmittelbar flächenbündig anliegt. Alternativ kann aber auch in der ebenfalls in Fig. 5 angedeuteten Weise der Hohlraum 6 über dem Kopf 14″ des Kerns 14 so bemessen sein, daß die Innenwand des Hohlraums 6 den Kernkopf 14″ nicht berührt.

Das in der Fig. 5 gezeigte Auflager zeichnet sich durch eine vom Ursprung der Kennlinie einsetzende hohe Schubsteifigkeit in Richtung der in Fig. 5 schematisch angedeuteten Schubkraft S aus. Entscheidend ist dabei wiederum, daß die Lagerplatte 4 an keiner Stelle einen direkten Kontakt zum Widerlager 5 hat, sondern mit diesem nur über eine mehr oder minder dicke Schicht des Elastomers des Elastomerblocks 1 in Verbindung steht. Wiederum kann durch die Dicke und Härte dieser Elastomerzwischenschicht zwischen der Lager platte 4 und dem Widerlager 5 eine Feinabstimmung der an sich vom Ursprung an relativ steifen Kennlinie der Schubsteifigkeit vorgenommen werden.

Alternativ kann jedoch auch das in der Fig. 5 gezeigte Ausführungsbeispiel des Auflagers in der aus den Fig. 1 bis 4 ersichtlichen Weise dergestalt ausgelegt sein, daß der Hohlraum 6 ein größeres Volumen als der Kern 14 aufweist. Dabei wird es sich, um eine inhomogene Erhöhung der Drucksteifigkeit zu vermeiden, insbesondere in der aus Fig. 5 ersichtlichen und vorstehend schon erörterten Weise um eine Erhöhung des Hohlraums 6 in Richtung der Auflast handeln.

Ein weiteres Ausführungsbeispiel des Auflagers ist schließlich in der Fig. 6 dargestellt. In einem Elastomerblock 1 sind als Bewehrung eine Lagerplatte 4 und eine Gegenlagerplatte 2 einvulkanisiert. Im Elastomer 1 ist ein Hohlraum 6 ausgespart, der sich zur Oberfläche 8 des Auflagers öffnet. Die Lagerplatte 4 weist im Bereich des Hohlraumes 6 eine Öffnung 10 auf, die koaxial und konzentrisch zum Hohlraum 6 ausgerichtet ist und einen kleineren Durchmesser als der Hohlraum 6 aufweist. Im Bereich der Öffnung 10 ragt also die Lagerplatte 4 nach Art eines Innenflansches im oberen Randbereich des Hohlraumes 6 in diesen hinein.

Die Öffnung 10 ist mit einem Innengewinde 11 versehen, in das über ein Außengewinde 12 ein massiver zylindrischer Stahlkern 14 über einen als Innensechskant 22 ausgebildeten Kopf fest eingeschraubt ist. Aus fertigungstechnischen Gründen, aber auch aus Gründen einer saubereren und einfachen Handhabung, ist auf der äußeren Oberfläche der Lagerplatte 4 ein größerer Bereich 25 um die Öffnung 10 herum beim Gummieren bzw. Einvulkanisieren der Lagerplatte 4 freigelassen worden. Dadurch wird die Einwirkung der in den Elastomerblock 1 einvulkanisierten Lagerplatte 4 auf die Federkenndaten des gesamten Auflagers nicht verändert oder beeinflußt. Dieser ungummierte Teilbereich 25 ist also ein Beispiel für einen im Hinblick auf die Lagerfunktion des Auflagers unwesentlichen Teilbereich des Lagers, der nicht vom Elastomer umschlossen ist.

Der Kern 14 und der Hohlraum 6 sind beide zylindrisch, also mit zueinander komplementären Oberflächen, ausgebildet. Das Volumen des Hohlraumes 6 ist größer als das Volumen des in den Hohlraum hineinragenden Teils des Kerns 14. In dem in Fig. 6 gezeigten unbelasteten Zustand des Lagers berührt die Innenwand 9 des Hohlraumes 6 die Oberfläche 14′ des Kerns 14 an keiner Stelle. Bei belastetem Lager treten zwar die zylindrischen Flächen des Hohlraumes 6 und des Kerns 14 durch die Verformung des Elastomers in Anlage, jedoch bleibt zwischen dem Kopf 14″ des Kerns 14 und dem Scheitel oder Boden 9′ des Hohlraumes 6 ein ausreichend großer Zwischenraum frei, um innerhalb der erwarteten Einsatzamplituden ein freies, dem Kern nicht mit einbeziehendes oder berührendes Schwingen der Auflast gewährleistet ist.

Auf der Gegenlagerplatte 2 ist ein biegefester Käfig 21 starr befestigt, hier aufgeschweißt, der vollständig im Material des Elastomerblockes einvulkanisiert ist und den Hohlraum 6 mit Abstand teleskopartig übergreift und umschließt, ohne an irgendeiner Stelle im Inneren des Hohlraums 6 freizuliegen.

Der starre biegefeste zylindrische Käfig 21 ist axial so lang, daß er den Kern 14 bereits im unbelasteten Zustand des Lagers deutlich und bei bestimmungsgemäß belastetem Lager wesentliche Teile des Kerns 4 umschließt und übergreift. Andererseits ist der Käfig 21 axial aber nur so lang ausgebildet, daß er bei bestimmungsgemäß belastetem Auflager die Federkennlinie des Lagers durch eine zumindest praktisch nicht mehr abgefederte Auflage auf der Lagerplatte 4 nicht funktionswesentlich beeinflußt und verändert, also verhärtet und versteift.

Auch bei einem Einsatz des Lagers im Schwer- und Schwerstlastbereich wird der für die Herstellung des Elastomerblockes 1 verwendete Werkstoff relativ weich eingestellt, vorzugsweise mit einer Härte im Bereich von 20 bis 50 Shore A, insbesondere bis 40 Shore A. Ein solch relativ weicher Gummi ist jedoch wenig geeignet, in der relativ dünnen Schicht 23, 24 zwischen der äußeren Oberfläche der Lagerplatte bzw. Gegenlagerplatte und der äußeren Oberfläche des Auflagers dem Lagerbauteil die erforderliche Festigkeit zu verleihen. Andererseits würde ein Tieferlegen der äußeren Bewehrungsplatten 2,4 unter Umständen zu einem unerwünschten Schwimmen des Lagers führen. Aus diesem Grunde sind die Außenschichten 23,24 des Lagers vorzugsweise aus einem härter eingestellten Elastomer hergestellt als der innere Teil des Elastomerblocks 1. In dem hier beschriebenen Ausführungsbeispiel des Auflagers hat die äußere Elastomerschicht eine Härte von 70 Shore A.

Das in der Fig. 6 gezeigte Ausführungsbeispiel eignet sich insbesondere für solche Anwendungsfälle, in denen von vornherein mit der Einwirkung relativ großer Querkräfte oder Schubkräfte auf das Auflager gerechnet werden muß.

**Ansprüche**

1. Auflager aus einem zur Schubversteifung bewehrten Elastomer (1), in dem eine bis gegebenenfalls auf die Außenkanten und im Hinblick auf die Lagerfunktion unwesentliche Teilbereiche vollständig vom Material des Elastomerblocks umschlossene starre Lagerplatte (4) einvulkanisiert ist, **gekennzeichnet** durch mindestens einen im Elastomerblock (1) ausgebildeten, zur Lagerplatte (4) hin offenen, gegenüberliegend geschlossenen Hohlraum (6), in dem ein biegefest mit der Lagerplatte (4) verbundener biegefester oder plastisch oder elastisch biegesteifer Kern (14) aufgenommen ist, der eine höhere Schubsteifigkeit als der Elastomerblock (1) aufweist.

2. Auflager nach Anspruch 1, dadurch **gekennzeichnet**, daß der Kern (14) um eine zur Richtung der vom Lager aufzunehmenden Auflast (F) parallele Achse rotationssymmetrisch ist.

3. Auflager nach Anspruch 1, dadurch **gekennzeichnet**, daß ein oder mehrere Kerne (14) im Elastomerblock (1) derart angeordnet, verteilt und/oder ausgebildet sind, daß einer aus beliebiger oder einer bestimmten Richtung einwirkenden Schubkraft (S) eine quer zu dieser gleichmäßig oder nach vorgegebenem Profil verteilte Schubsteifigkeit entgegenwirkt.

4. Auflager nach Anspruch 1, dadurch **gekennzeichnet**, daß das Volumen des Hohlraums (6) größer ist als das Volumen des in den Hohlraum hineinragenden Teils des Kerns (14), und daß die Innenwandfläche des Hohlraums und die in den Hohlraum hineinragende Oberfläche des Kerns (14) dergestalt komplementär zueinander ausgebildet sind, daß im unbelasteten Zustand des Lagers die Innenwand (9) des Hohlraums (6) die Oberfläche (14') des Kerns (14) nicht berührt und bei bestimmungsgemäß belastetem Lager zumindest der Kopf (14'') des Kerns (14) den Boden (9') des Hohlraums (6) nicht berührt.

5. Auflager nach Anspruch 4, dadurch **gekennzeichnet**, daß in dem zwischen der Innenwand (9) des Hohlraums (6) und der Oberfläche (14') des Kerns (14) gebildeten Zwischenraum ein Dämpfungsmittel (17) und/oder ein in Wirkrichtung der Schubversteifung wirksames Federglied (19) angeordnet sind.

6. Auflager nach Anspruch 1, **gekennzeichnet** durch eine der Lagerplatte (4) zumindest im wesentlichen flächenparallel im Elastomerblock (1) gegenüberliegende starre Gegenlagerplatte (2), die ebenfalls bis gegebenenfalls auf die Außenkanten und im Hinblick auf die Lagerfunktion unwesentliche Teilbereiche vollständig vom Material des Elastomerblocks (1) umschlossen ist, und auf der starr ein biegefester Käfig (21) befestigt ist, der, ebenfalls zumindest im wesentlichen vollständig, im Material des Elastomerblocks eingebettet, den Hohlraum (6) mit Abstand umschließt oder zumindest übergreift und sich dabei so weit in den Zwischenraum zwischen Lagerplatte (4) und Gegenlagerplatte (2) hinein erstreckt, daß er einen wesentlichen Teil des Kerns (4) mit übergreift, ohne bei bestimmungsgemäß belastetem Lager die Federkennlinie des Lagers durch praktisch nicht mehr federnde Auflage auf der Lagerplatte (4) funktionswesentlich zu verandern.

7. Auflager nach Anspruch 1, dadurch **gekennzeichnet**, daß der Hohlraum (6) durch die Lagerplatte (4) hindurch nach außen offen und der Kern (14) lösbar (16,12; 18) und austauschbar in der Lagerplatte (4) befestigt ist.

8. Auflager nach Anspruch 1, dadurch **gekennzeichnet**, daß der Kern (14), wenn er aus einem starren Werkstoff besteht, eine Sollbruchstelle (16) aufweist, die bei Überschreiten eines kritischen Grenzwertes der auf das Lager einwirkenden Schubkraft zum Bruch des Kerns (14) führt.

9. Auflager nach Anspruch 1, dadurch **gekennzeichnet**, daß der Elastomerblock zwischen Lagerplatte (4) und Gegenlagerfläche, gegebenenfalls zwischen Lagerplatte (4) und Gegenlagerplatte (2), aus einem weicheren Werkstoff besteht als im Bereich zwischen der Lagerplatte (4) und/oder gegebenenfalls auch der Gegenlagerplatte (2) und der äußeren Oberfläche des Lagers.

10. Auflager nach Anspruch 1, dadurch **gekennzeichnet**, daß die für die Kraftübertragung bestimmten Wirkflächen des oder der Kerne (14) und des Elastomerblocks (1) im Hohlraum (6) räumlich so gestaltet und in der Weise relativ zueinander angeordnet sind, daß die Progression der Schubversteifung einer jeweils anwendungsbedingt vorgegebenen Kennlinie entspricht.

## FIG.1

## FIG.2

# FIG.3

# FIG.4

FIG.5

FIG.6